# EUROPEAN PATENT SPECIFICATION

(11) **EP 3 003 666 B1**
(45) Date of publication and mention of the grant of the patent: **25.07.2018**
(21) Application number: 14747130.4
(22) Date of filing: 29.05.2014
(51) Int. Cl.: B29B 7/74, B29B 7/00, B29C 47/38, B29B 7/88, B29D 30/58, B29C 47/40, B29C 47/10, B29C 47/36, B29C 47/64, B29B 7/84, B29K 221/00, B29K 61/00

(54) **PROCESS FOR PRODUCING TYRES FOR VEHICLE WHEELS**
VERFAHREN ZUR HERSTELLUNG VON REIFEN FÜR FAHRZEUGRÄDER
PROCÉDÉ DE PRODUCTION DE PNEUS POUR ROUES DE VÉHICULE

(30) Priority: 30.05.2013 IT MI20130880
(43) Date of publication of application: 13.04.2016
(73) Proprietor: Pirelli Tyre S.p.A., 20126 Milano (IT)
(72) Inventor: ROMANI, Francesco, I-20126 MIlano (IT); DE CANCELLIS, Pierluigi, I-20126 Milano (IT); TESTI, Stefano, I-20126 Milano (IT); LONGONI, Alessio, I-20126 Milano (IT)
(74) Representative: Porta, Checcacci & Associati S.p.A
(86) International application number: PCT/IB2014/061814
(87) International publication number: WO 2014/191953

(56) References cited:
- EP-A1- 1 514 901
- EP-A2- 0 277 558
- WO-A1-97/09162
- WO-A1-2004/007172
- WO-A1-2009/062525
- WO-A1-2010/073275
- US-A- 4 687 794
- US-A1- 2002 016 404
- US-A1- 2012 161 366

## Description

### Background of the invention

The present invention relates to a process for producing tyres for vehicle wheels.

In particular, the invention concerns a process for producing elastomeric compounds adapted to make high and ultra-high performance tyres and racing tyres for vehicle wheels. More specifically, said elastomeric compounds have a preferred use in the production of the tread.

High and ultra-high performance tyres, which are often termed "HP" or "UHP" ("*High Performance*" or "*Ultra High Performance*") tyres, are in particular those which allow to reach speeds of over 200 km/h up to and beyond 300 km/h. Examples of such tyres are those belonging to the classes "T", "U", "H", "V", "Z" ,"W", "Y", according to the E.T.R.T.O. (European Tyre and Rim Technical Organisation) standards, in particular for high powered four-wheeled vehicles.

### State of the art

Conventionally, the production of elastomeric compounds can be carried out discontinuously by means of internal mixers, usually Banbury® mixers having two counter-rotating rotors that exert an intense mixing action to masticate the elastomeric base and to fully incorporate and disperse therein the other ingredients, such as for example fillers, lubricating adjuvants, cross linkers and auxiliary substances.

The compounding process that uses only internal mixers has many drawbacks, in particular poor heat dissipation and therefore poor temperature control, mainly due to an unfavourable relationship between volume of material and surface area of the mixer. In order to improve the dispersion in the elastomeric base, the various ingredients are incorporated in the elastomeric base in batches distributed among a plurality of mixing steps separated by cooling steps and possibly storage steps. Temperature-sensitive ingredients such as, for example, cross linking agents and accelerators, are added only during the final mixing step after cooling the elastomeric compound below a predetermined temperature (usually below 110°C) to avoid scorching of the compound itself.

The compounding process in internal mixers is widely used in the field of production of elastomeric compounds for tyres, in particular, compounding in internal mixers allows to incorporate and disperse the reinforcing fillers in the elastomeric bases in a sufficiently homogeneous way without encountering the degradation of the elastomeric base for the production of a great part of elastomeric compounds for tyre components.

However, when plasticizers are added during compounding to decrease the rigidity of the elastomeric material being processed and avoid an excessive temperature increase, the ability of internal mixers to disperse the ingredients is reduced.

In order to overcome such limitations of discontinuous processes, in particular to avoid the handling and transfer of the elastomeric material and its storage, continuous compounding processes have been performed. Continuous compounding processes carried out by means of a continuous mixer would allow to improve the dispersion of the various ingredients in the elastomeric base without any thermal-mechanical degradation of the polymer during processing. However, it can be difficult to precisely and homogeneously disperse large amounts of plasticizers within the elastomeric compound even with the continuous processes according to the prior art. The volumetric or gravimetric devices to be used to feed to the continuous mixer the compounding ingredients, for example, minor ingredients, require very accurate control of the dosing precision.

Such devices generally consist of complex systems and can impose production limitations on the mixer since to ensure a homogeneous dispersion of the ingredients in the polymeric material, the feeding of the ingredients can require a low advancing speed of the material within the mixer.

Processes and apparatuses for continuously producing elastomeric compounds are described in international patent applications WO 2009/062525 and WO 2003/051596 in the name of the Applicant and in U.S. patent application No. 2004/0147669.

US 4,687,794 discloses a novel process for preparing rubber-based composition, e.g. adhesive formulations including natural and/or synthetic rubber and a quantity of tackifier for increasing adhesion, wherein said resin is incorporated in the composition via a cavity transfer mixing ("CTM").

US 2002/0016404 discloses elastomer composite blends produced by a wey/dry mixing method and apparatus. In the wet mixing step or stage, fluid streams of particulate filler and elastomer latex are fed to the mixing zone of a coagulum reactor to form a mixture in semi-confined flow continuously from the mixing zone through a coagulum zone to a discharge end of the reactor. The particulate filler fluid is fed under high pressure to the mixing zone, such as to form a jet stream to entrain elastomer latex fluid sufficiently energetically to substantially completely coagulate the elastomer with the particulate filler prior to the discharge end.

US 2012/0161366 discloses method and apparatus for applying a blended rubber composition directly onto a tire building drum or core is described. A first extruder and a first gear pump for a first compound is provided. A second extruder and a second gear pump for a second compound is provided. The output of the first and second gear pump is fed into the inlet of the main extruder. A third pumping means is provided for pumping an accelerator mixture into the inlet of the main extruder; mixing together said first compound and said second compound and said accelerator mixture in said extruder and applying the mixture onto a tire building drum or core.

### Summary of the invention

HP, UHP tyres and racing tyres can undergo circumferential, transversal and combined stresses of substantial degree during the extreme manoeuvres which they are subjected to during changes of speed and/or direction, since the tyres must exchange large forces with the road surface.

The efficiency of such an exchange of forces can be compromised by an insufficient friction generated between the tyre and the road surface.

Starting from this observation, the Applicant afforded the problem of improving the operating characteristics at high speeds and/or in extreme driving conditions of high and ultra-high performance tyres and of racing tyres via an increase of the friction which may be developed during the aforementioned manoeuvres.

The Applicant has observed that one of the methods for increasing the friction of a tyre is that of promoting the retention and the controlled release of adhesive substances inside the tread, so as to form a sticky layer distributed over the surface of the tyre tread and constantly renewed during tyre rolling.

Such a sticky layer can be provided by resins incorporated in the tread compound that the Applicant believe are released during rolling from the mass of elastomeric material and emerge on its surface.

A first critical aspect of the incorporation of resins in a tread compound by compounding in mixing apparatuses is constituted by the high stickiness of the tread compound to be produced in particular when the resins are used in large amounts, such as in the case of HP, UHP tyres and racing tyres. The compound including large amounts of resin is so sticky that it adheres to the rotors, to the machine body of the discontinuous mixer and to all the parts with which it comes into contact requiring long and complex manual operations to discharge the compound and to clean the residues, limiting the production capacity and industrialisation of the process.

A second critical aspect of discontinuous production apparatuses is that the dispersion of some components, in particular the resins, which are generally added to the elastomeric base before the final compounding step in which the cross linking agents and the accelerators are added (completion step) is unsatisfactory.

On the other hand, feeding such a compound to a continuous mixer for the completion step would be equally complex due to the difficulty of reducing the compound to be fed into particles since the latter would tend to quickly aggregate again due to the presence of the resins, forming a compact mass that would tend to block the loading hopper typically used for feeding.

In addition to the difficulties caused by the stickiness of the compound, the Applicant has also found that the elastomeric compound obtained by means of production methods capable of not excessively limiting productivity (for example by means of mixers having a large size and/or by means of a limited number of compounding steps) can be unsatisfactory in terms of reproducibility when a high amount of resins in the compound is required.

The Applicant has therefore found that in the production of elastomeric compounds which require large amounts of resins (for example more than 20 phr), there are mutually contrasting requirements: the stickiness of the compound and the need to obtain reproducible and stable results impose a great limitation on productivity; the need for a high productivity generates a poor quality in terms of resin dispersion and of reproducibility/stability of the compound obtained, as well as a difficulty in the management of large amounts of a highly sticky material.

The Applicant has therefore afforded the problem of providing a more efficient production process for producing elastomeric compounds comprising a high amount of resins (more than 20 phr) and intended for the production of high and ultra-high performance tyres and of racing tyres for vehicle wheels.

The term "resin", is used to indicate a polymeric additive having thermoplastic or at least partially thermoplastic characteristics such as the elastomeric/thermoplastic block copolymers.

The expression "thermoplastic characteristics of a polymeric additive", is used to indicate the tendency of the polymer to increase its viscosity, i.e. to plastically deform when subjected to a temperature increase and/or to a sufficiently large deformation.

The resins that can be used for producing the high and ultra-high performance tyre and the racing tyre by means of the process according to the invention can be solid or liquid; solid resins preferably have a softening point comprised between 60°C and 160°C, preferably between 80°C and 140°C. Liquid resins can be low molecular weight resins having a structure similar to that of the solid ones and having softening points substantially comprised between room temperature (for example about 20°C or 25°C) and temperatures of -25°C and below, down to -50°C or even down to -80°C.

The term "phr" (acronym of "parts per hundred of rubbers"), is used to indicate parts by weight per 100 parts by weight of total elastomeric base. To calculate 100 parts of total elastomeric base no account is taken of possible additives (such as possible elastomeric thermoplastic resins) and possible elastomers present in so-called oil-extended form are considered net of the incorporated plasticizer.

The Applicant has found that the addition into a continuous mixer of at least a substantial amount of resins within the elastomeric compound after the completion step (i.e. downstream of the addition of the vulcanizing agents) allows to improve the quality of the produced compound in terms of better dispersion of the partially or totally insoluble resins with the advantages which will be further described hereinafter and to increase the productivity of the mixing apparatus with respect to the production methods of the state of the art in which the addition of resins within the elastomeric compound precedes the completion step.
The Applicant has also surprisingly found that it is possible to achieve substantial improvements in terms of performance and stability, as well as in terms of mechanical strength of high and ultra-high performance and racing tyres in which the tread comprises at least one tread compound produced according to the invention.
Although the Applicant does not wish to be bound by any interpretative theory, it is believed that the better dispersion of the partially or totally insoluble resins within the elastomeric compound is related to the process according to the invention, in a way which however has not yet been elucidated for certain, in particular to specific conditions inside the continuous mixer which allow to generate high shear stresses, in a very short time.
Advantageously, the process according to the invention allows a quick incorporation and dispersion of the resin within the elastomeric compound, after the completion step, without compromising what has been obtained in the previous compounding steps, i.e. without scorching the material and without altering the characteristics of the other ingredients present in the elastomeric compound, in particular of the elastomeric polymer.
More particularly, according to a first aspect, the present invention relates to a process for producing a tyre for vehicle wheels according to claim 1, comprising:
a) producing a green tyre comprising a tread band applied at a radially outer position of the tyre;
b) subjecting said green tyre to moulding and vulcanization in order to obtain a finished tyre,
wherein said tread band comprises at least one tread compound, including at least one resin in a total amount higher than 20 phr, said tread compound being produced by:
- feeding to at least one mixing apparatus comprising at least one discontinuous mixer and/or at least one continuous mixer at least the following components of a first elastomeric compound: at least one elastomeric polymer, at least one reinforcing filler and at least one vulcanizing agent;
- mixing and dispersing said components so as to obtain said first elastomeric compound;
- discharging said first elastomeric compound from said mixing apparatus;
- feeding to at least one continuous mixer said first elastomeric compound and at least one part of said amount of at least one resin;
- mixing and dispersing said at least one part of said amount of at least one resin in said first elastomeric compound by means of said at least one continuous mixer so as to obtain said tread compound;
- discharging said tread compound from said at least one continuous mixer.
The Applicant has found that thanks to the characteristics of the process according to the invention, it is possible to produce, with high productivity, a high and ultra-high performance tyre and/or a racing tyre which achieves a better balance performance/stability, i.e. a better performance on road while keeping the performance level substantially constant during use by means of a grip (coefficient of friction) increase and of a road holding increase even during extreme manoeuvres.

According to a second aspect, the disclosure relates to a process for producing a tread compound, including at least one resin in a total amount higher than 20 phr, comprising:
- feeding to at least one mixing apparatus comprising at least one discontinuous mixer and/or at least one continuous mixer at least the following components of a first elastomeric compound: at least one elastomeric polymer, at least one reinforcing filler and at least one vulcanizing agent;
- mixing and dispersing said components so as to obtain said first elastomeric compound;
- discharging said first elastomeric compound from said mixing apparatus;
- feeding to at least one continuous mixer said first elastomeric compound and at least one part of said amount of at least one resin;
- mixing and dispersing said at least one part of said amount of at least one resin in said first elastomeric compound by means of said at least one continuous mixer so as to obtain said tread compound;
- discharging said tread compound from said at least one continuous mixer. Advantageously, the process according to the present invention allows to homogeneously disperse the resins within the elastomeric compound and to form with the same a single-phase system in which the resins are substantially indistinguishable.

Advantageously, the aforementioned single-phase system allows to obtain a continuous and uniform release over time of the resins included in large amounts within the compound of the tread, so as to increase the grip and road holding of the tyre.

Within the framework of the present description and of the subsequent claims, all the numerical values expressing amounts, quantities, percentages, and so forth, are to be understood as being preceded in all instances by the term "about" except where otherwise indicated. Also, all ranges of numerical entities include all the possible combinations of the maximum and minimum numerical values and all the possible intermediate ranges therein, in addition to those specifically indicated hereinbelow.

The expression "first elastomeric compound", is used to indicate a compound that, although lacking a substantial part of resin and/or plasticizer, has been subjected to a completion step and could be a substantially vulcanizable compound. The first compound, however, does not comprise, in quantity and/or species, all of the ingredients which instead are present in the tread compound intended to be included in the tyre according to the invention.

The term "discontinuous mixer or batch mixer", is used to indicate a mixing device configured to receive the components of an elastomeric compound periodically fed in predetermined amounts (batches) and to mix them for a predetermined time (possibly in several steps) so as to obtain the elastomeric compound.

The term "continuous mixer", is used to indicate a mixing device configured to receive the components of an elastomeric compound fed in continuous (with the exception of a possible stop of the mixing device for maintenance, or for changing the recipe of the elastomeric compound), typically by means of controlled-dose dosing devices, and configured to mix the components so as to obtain (possibly in several mixing steps) the elastomeric compound, and configured to discharge the elastomeric compound in a continuous flow, as opposed to a periodic loading/unloading of a discontinuous mixing device.

Continuous mixers or mixing extruders substantially comprise a cylindrical chamber in which rotate, for example, a worm screw or a plurality of screws or blades in the case of planetary mixers: the mixing of the material takes place during its travel within the cylindrical chamber.

The main function of the continuous mixer is to masticate the elastomeric material raising its temperature so as to make it soft and plastic to facilitate the incorporation and/or distribution of the ingredients within the polymeric matrix. The continuous mixer is thus equipped with mixing portions capable of imparting to the compound a high shear stress and with possible redistribution portions. Moreover, the continuous mixer is equipped with axial displacing portions to displace the material being processed from one longitudinal end of the aforementioned chamber to the other.

According to a preferred embodiment, the process according to the invention can be carried out continuously or discontinuously.

When said process is carried out continuously, said first elastomeric compound is directly fed to said at least one continuous mixer together with at least one part of at least one resin without being stored.

When said process is carried out discontinuously, said first elastomeric compound is fed to said at least one continuous mixer together with at least one part of at least one resin after having been stored.

In a preferred embodiment, said first elastomeric compound is obtained by means of at least two mixing and dispersing steps.

Preferably, said at least two mixing and dispersing steps are carried out in sequence in at least one discontinuous mixer.

Preferably, said at least two mixing and dispersing steps are carried out in sequence in at least one first discontinuous mixer and in at least one second discontinuous mixer arranged downstream of said first discontinuous mixer.

In a further preferred embodiment, said at least two mixing and dispersing steps are carried out in sequence in at least one discontinuous mixer and in at least one continuous mixer arranged downstream of said discontinuous mixer.

Preferably, between one mixing step and the next, the elastomeric compounds are accumulated and/or stored for example in the form of strips or sheets.

According to a preferred embodiment, the process according to the invention further comprises reducing said first elastomeric compound into a subdivided product.

The term "subdivided product", is used to indicate a product in distinct particles. Preferably, said particles have an average particle size comprised between 5 mm and 50 mm, more preferably between 10 mm and 40 mm, still more preferably between 12 mm and 30 mm. Preferably, said particles are in the form of granules, pellets, small balls or pearls.

Preferably, said particles are obtained from a strip, a sheet or a bale of said first elastomeric compound.

Optionally, the process further comprises spraying a lubricating liquid on the elastomeric compound during or after the reduction into distinct particles, to improve the flow of the particles when they reach the feeding hopper of the continuous mixer. Such a liquid can for example be soapy water that is eliminated without problems during mixing in the continuous mixer without leaving polluting substances.

Optionally, the process further comprises coating the elastomeric compound with a powdery solid during or after the reduction into distinct particles, to improve the flow of the particles when they reach the feeding hopper of the continuous mixer. Such a powdery solid is for example silica that is incorporated without problems during the mixing in the continuous mixer providing a further advantageous reinforcement to the elastomeric material.

According to a further preferred embodiment, the process according to the invention further comprises cooling said first elastomeric compound.

Preferably, said first elastomeric compound is cooled to a temperature comprised between 15°C and 60°C, more preferably between 20°C and 40°C.

Advantageously, cooling said first elastomeric compound allows to avoid scorching the compound itself during the subsequent mixing.

The polymeric base of the elastomeric compound included in the tread according to the present invention can consist of any elastomeric polymer or mixture of elastomeric polymers commonly used to produce tyres and in particular to produce the tread.

According to a preferred embodiment of the present invention, the elastomeric polymer is a diene polymer (a) that can be selected from those commonly used in sulphur crosslinkable elastomeric materials which are particularly suitable for producing tyres, i.e. from elastomeric polymers or copolymers with an unsaturated chain having a glass transition temperature (Tg) generally below 20°C, preferably comprised in the range from 0°C to -110°C. These polymers or copolymers can be of natural origin or can be obtained by polymerisation in solution, polymerisation in emulsion or polymerisation in gaseous phase of one or more conjugated diolefins, optionally mixed with at least one comonomer selected from monovinylarenes and/or polar comonomers in an amount not higher than 60% by weight. Conjugated diolefins containing generally from 4 to 12, preferably from 4 to 8 carbon atoms, can be selected, for example, in the group comprising: 1,3-butadiene, isoprene, 2,3-dimethyl-1,3-butadiene, 1,3-pentadiene, 1,3-hexadiene, 3-butyl-1,3-octadiene, 2-phenyl-1,3-butadiene, or mixtures thereof. 1,3-butadiene and isoprene are particularly preferred. Monovinylarenes, which can possibly be used as comonomers, generally contain from 8 to 20, preferably from 8 to 12 carbon atoms and can be selected, for example, in the group comprising: styrene; 1-vinylnaphthalene; 2-vinylnaphthalene; various alkyl, cycloalkyl, aryl, alkylaryl or arylalkyl derivatives of styrene such as, for example, -methylstyrene, 3-methylstyrene, 4-propylstyrene, 4-cyclohexylstyrene, 4-dodecylstyrene, 2-ethyl-4-benzylstyrene, 4-p-tolyl styrene, 4-(4-phenylbutyl)styrene, or mixtures thereof. Styrene is particularly preferred.

Polar comonomers, which can possibly be used, can be selected, for example, in the group comprising: vinylpyrrolidine, vinyl quinoline, esters and nitriles of acrylic acid and of alkyl acrylic acid, or mixtures thereof, such as, for example, methyl acrylate, ethyl acrylate, methyl methacrylate, ethyl methacrylate, acrylonitrile, or mixtures thereof.

Preferably, the diene elastomeric polymer (a) that can be used in the present invention can be selected, for example, in the group comprising: cis-1,4-polyisoprene (natural or synthetic, preferably natural rubber), 3,4-polyisoprene, polybutadiene (in particular polybutadiene with high content of 1,4-cis), possibly halogenated isoprene/isobutene copolymers, 1,3-butadiene/acrylonitrile copolymers, styrene/1,3-butadiene copolymers, styrene/isoprene/1,3 -butadiene copolymers, styrene/1,3-butadiene/acrylonitrile copolymers, or mixtures thereof.

According to a preferred embodiment, said elastomeric compound comprises at least 10% by weight of natural rubber, preferably between 20% by weight and 100% by weight of natural rubber, with respect to the total weight of said at least one elastomeric diene polymer (a).

The aforementioned elastomeric compound can possibly comprise at least one elastomeric polymer of one or more monoolefins with an olefin comonomer or derivatives thereof (a').

Monoolefins can be selected in the group comprising: ethylene and -olefins generally containing from 3 to 12 carbon atoms, such as, for example, propylene, 1-butene, 1-pentene, 1-hexene, 1-octene, or mixtures thereof.

The following are preferred: ethylene/ -olefin copolymers, possibly with a diene; homopolymers of isobutene or copolymers thereof with small amounts of a diene, which are possibly at least partially halogenated. The diene possibly present generally contains from 4 to 20 carbon atoms and is preferably selected from: 1,3-butadiene, isoprene, 1,4-hexadiene, 1,4-cyclohexadiene, 5-ethylidene-2-norbornene, 5-methylene-2-norbornene, vinilnorbornene, or mixtures thereof. Among these, the following are particularly preferred: ethylene/propylene copolymers (EPR) or ethylene/propylene/diene copolymers (EPDM); polyisobutene; butyl rubbers; halobutyl rubbers, in particular chlorobutyl or bromobutyl rubbers; or mixtures thereof.

A diene elastomeric polymer (a) or an elastomeric polymer (a') functionalised by reaction with suitable terminating agents or coupling agents may also be used.

In particular, the diene elastomeric polymers obtained by anionic polymerisation in the presence of an organometallic initiator (in particular an organolithium initiator) can be functionalised by reacting the residual organometallic groups derived from the initiator with suitable terminating agents or coupling agents such as, for example, imines, carbodiimides, alkyl tin halides, substituted benzophenones, alkoxysilanes or aryloxysilanes.

The elastomeric compound included in the tread according to the present invention comprises at least one reinforcing filler, preferably carbon black (c).

Preferably, the carbon black reinforcing filler (c) that can be used in the present invention is selected from those having a surface area not lower than 20 m²/g, preferably higher than 50 m²/g (determined by STSA - statistical thickness surface area according to ISO 18852:2005). According to a further preferred embodiment, said carbon black reinforcing filler (c) is present in the elastomeric compound in an amount comprised between 0.1 phr and 120 phr, preferably between about 40 phr and about 110 phr.

The elastomeric compound can also comprise at least one silane coupling agent (d).

According to a preferred embodiment, the silane coupling agent (d) can be selected from those having at least one hydrolysable silane group, which can be identified, for example, by the following general formula (I):

(R')₃Si-CₙH₂ₙ-X (I)

in which the groups R', which may be equal or different from each other, are selected from: alkyl, alkoxy or aryloxy groups or halogen atoms, provided that at least one of the groups R' is an alkoxy or aryloxy group; n is an integer between 1 and 6, end points of the range included; X is a group selected from: nitroso, mercapto, amino, epoxy, vinyl, imide, chlorine, -(S)ₘCₙH₂ₙ-Si-(R')₃ and -S-COR', wherein m and n are integers between 1 and 6, end points of the range included, and the groups R' are as defined above. Among the silane coupling agents, particularly preferred ones are bis(3-triethoxysilylpropyl) tetrasulphide and bis(3-triethoxysilylpropyl) disulphide. Said coupling agents can be used as such or as a suitable compound with an inert filler (for example carbon black) so as to facilitate their incorporation in the elastomeric compound.

According to a further preferred embodiment, said silane coupling agent (d) is present in the elastomeric compound in an amount comprised between about 0.01 phr and about 10 phr, preferably between about 0.5 phr and about 5 phr.

The elastomeric compounds illustrated above can be vulcanized according to known techniques, in particular with vulcanization systems commonly used for diene elastomeric polymers. In the vulcanization systems at least one vulcanizing agent is included, advantageously sulphur, or sulphur-containing molecules which act as sulphur donors, with accelerators, activators and/or retardants known to those skilled in the art.

Sulphur and its derivatives can advantageously be selected, for example, from: (i) soluble sulphur (crystalline sulphur); (ii) insoluble sulphur (polymeric sulphur); (iii) oil-dispersed sulphur (for example sulphur at 33% known with the trade name of Crystex OT33 from Solutia); (iv) sulphur donors such as, for example, caprolactam disulfide (CLD), bis[(trialkoxysilyl)propyl]polysulphides, dithiophosphates; or mixtures thereof.

Said sulphur or derivatives thereof, are preferably used in the elastomeric compound in an amount from about 0.05 phr to about 10 phr. More preferably, said sulphur or derivatives thereof are used in the elastomeric compound in an amount from about 0.1 phr to about 5 phr. Still more preferably, said sulphur or derivatives thereof are used in the elastomeric compound in an amount from about 0.2 phr to about 2 phr. Vulcanization activators, which are particularly effective, are zinc compounds. In particular, ZnO, ZnCO₃, zinc salts of saturated or unsaturated fatty acids containing from 8 to 18 carbon atoms are used.

For example, zinc stearate, preferably formed *in situ* from ZnO and fatty acid, and also MgO, or mixtures thereof, are used in the elastomeric compound.

Said vulcanization activators are preferably used in the elastomeric compound in an amount from about 0.5 phr to about 10 phr. More preferably, said vulcanization activators are used in the elastomeric compound in an amount from about 1 phr to 5 phr. Still more preferably, said vulcanization activators are used in the elastomeric compound in an amount from about 1.5 phr to 3.5 phr.

According to a further preferred embodiment, the elastomeric compound can further comprise at least one vulcanization accelerator.

Vulcanization accelerators that are commonly used can be selected from, for example, dithiocarbamates, guanidines, thioureas, thiazoles, sulfenamides, sulfenimides, thiurams, amines, xanthates, or mixtures thereof.

Said vulcanization accelerators are preferably used in the elastomeric compound in an amount from about 0.05 phr to about 10 phr. More preferably, said vulcanization accelerators are used in the elastomeric compound in an amount from about 0.1 phr to about 5 phr. Still more preferably, said vulcanization accelerators are used in the elastomeric compound in an amount from about 0.5 phr to about 3 phr.

The elastomeric compound can comprise other commonly used additives selected on the basis of the specific application for which the compound is intended. For example, the following additives can be added to said elastomeric compound: anti-ageing agents, anti-reversion agents, plasticizers, adhesives, antiozonants, in particular of the type p-phenylenediamine, waxes, modifier resins, fibres (for example Kevlar® pulp), or mixtures thereof.

In particular, in order to further improve workability, a plasticizer (e) generally selected from mineral oils, vegetable oils, synthetic oils or mixtures thereof, such as, for example, aromatic oil, naphthenic oil, phthalates, alkyl or aryl esters of phosphoric acid, soybean oil, possibly modified with epoxy functionalities, or mixtures thereof, can be added to said elastomeric compound. The amount of plasticizer is generally comprised between 0 phr and 70 phr, preferably between about 5 phr and about 30 phr.

The resins advantageously used in the present invention can be selected in the group of hydrocarbon resins having a number average molecular weight comprised between many hundreds and many thousands and that provides stickiness and a modification in the viscoelastic characteristics towards a hysteresis increase, when the resin is mixed with natural or synthetic rubber.

Various types of synthetic resins may be used as resins. The aforementioned number average molecular weight (Mn) can be measured according to techniques known in the art such as, for example, by gel permeation chromatography (GPC).

Preferably, oil-derived resins, phenol-based resins, carbon-based resins, xylene-based resins and natural resins, such as rosin-based resins or terpene-based resins, may be used.

Preferred examples of aromatic oil-based resins that can be used in the present invention and that are commercially available are the products PETROSIN produced by MITSUI SEKIYU KAGAKU Co., Ltd., PETRITE produced by MIKUNI KAGAKU Co., Ltd., NEOPOLYMER produced by NIPPON SEKIYU KAGAKU Co., Ltd., and PETCOAL produced by TOYO SODA Co., Ltd.

Preferred examples of phenol-based resins comprise alkylphenol-formaldehyde based resins, derived resins modified with rosin, alkylphenol-acetylene based resins, modified alkylphenol and terpene-phenol resins. Specific examples of products available on the market that can be used in the present invention are HITANOL 1502 (produced by HITACHI KASEI Co., Ltd.) which is a novolac alkylphenol resin, RESIN SP-1068 (produced by SI GROUP Inc.) which is an octylphenol-formaldehyde resin, Escorez® 1102 which is an aliphatic tackifying resin (produced by ExxonMobil), and KORESIN (produced by BASF Company) which is a p-t-butylphenol-acetylene resin.

Examples of carbon-based resins include cumarone-indene, styrene-indene, styrene-alkylstyrene resins. Specific examples of products available on the market that can be used in the present invention are NOVARES C resins (produced by RUTGERS CHEMICAL GmbH) which are synthetic indene-cumarone resins. NOVARES C10, C30 and C70 are particularly preferred.

Examples of xylene based resins comprise xylene-formaldehyde resins.

The resins can be used alone or mixed together.

In a preferred embodiment, the total amount of resin in the tread compound is less than 60 phr.

Preferably, the total amount of resin in the tread compound is comprised between 25 phr and 55 phr, more preferably comprised between 30 phr and 50 phr. Preferably feeding to at least one continuous mixer said first elastomeric compound and at least one part of said at least one resin comprises feeding at least 15 phr of said at least one resin.

Preferably, the at least one resin can all be fed to the continuous mixer.

In a preferred embodiment, a further part of the overall amount of the at least one resin is fed to the mixing apparatus, preferably in an amount equal to or lower than 20 phr, more preferably in an amount comprised between 10 and 20 phr.

According to a preferred embodiment of the present invention, the process according to the invention further comprises feeding to said at least one mixing apparatus at least one additional ingredient selected from those indicated above (for example silane coupling agents, additives, plasticizers, or mixtures thereof) .

According to a preferred embodiment, the process according to the invention further comprises feeding to said at least one continuous mixer said first elastomeric compound, at least one part of at least one resin and optionally at least one part of plasticizing oils.

According to a preferred embodiment, the mixing apparatus comprises at least one discontinuous mixer selected from an internal mixer (closed) or an open mixer.

Generally, said discontinuous mixers comprise a pair of rotors of the tangential or interpenetrating type.

Generally, said discontinuous mixer comprises a mixing chamber inside which a pair of rotors rotating in opposite directions to each other are housed, so as to mix the components introduced into the mixing chamber from its top.

To this end, said discontinuous mixer is generally provided with a pneumatic or hydraulic cylinder arranged in the upper part of the mixing chamber and a piston that moves both upwards to open the mixing chamber, allowing the introduction of the compound ingredients from suitable loading hoppers, and downwards to exert a pressure on the material being processed in the mixing chamber and located above the pair of rotors.

A pneumatic or hydraulic system positioned on the bottom of the mixing chamber allows the elastomeric compound to be discharged at the end of the mixing cycle through the opening of a suitable nosepiece.

Specific examples of discontinuous mixers that can be advantageously used according to the present invention are of the closed type (Banbury®, Intermix®) or open type (open mill or Z-blade).

According to a preferred embodiment, the mixing by means of said at least one discontinuous mixer is carried out at a rotor speed comprised between 10 rpm and 60 rpm, preferably between 20 rpm and 50 rpm in the case of a closed mixer; at a rotor speed between 10 rpm and 40 rpm, preferably between 10 rpm and 30 rpm in the case of an open mixer.

In the preferred embodiment wherein said first elastomeric compound is obtained by means of at least two mixing and dispersing steps, carried out in sequence in at least one discontinuous mixer, a first step is provided wherein at least one elastomeric polymer and at least one reinforcing filler are fed, and a second step wherein at least one vulcanizing agent and optionally at least one further part of at least one resin are fed. According to a preferred embodiment, said first mixing step is carried out at a temperature of the material being processed comprised between 130°C and 150°C.

According to a preferred embodiment, said second mixing step is carried out at a temperature of the material being processed below 110°C preferably comprised between 90°C and 110°C.

In particular, the continuous mixer used after the completion step allows to add at least a relevant amount of resins within the elastomeric compound and to masticate the tread compound so as to disperse the resins within a single-phase system that the resins form with the elastomeric compound, thus allowing the slow release of the resins on the tread surface during driving with the advantages described above.

Specific examples of continuous mixers that can be advantageously used according to the present invention are of the twin-screw type or multiple screw type, co-rotating type, interpenetrating type, self-cleaning type or of the planetary rollers extruder type.

According to a preferred embodiment, the mixing and dispersion of said at least one part of resin by means of said at least one continuous mixer are carried out at a speed of the screw comprised between 40 and 400 rpm, preferably between 50 and 250 rpm.

According to a further preferred embodiment, the mixing and dispersion of said at least one part of resin by means of said at least one continuous mixer are carried out at a temperature of the material being processed comprised between 110°C and 140°C.

In a preferred embodiment, the L/D ratio (length/diameter of the screw) is comprised between 16 and 64, preferably between 24 and 56.

In a further preferred embodiment, the aforementioned continuous mixer used for the addition of at least one part of resin after the completion step has a specific energy comprised between 0.05 and 0.5 kWh/kg, preferably between 0.1 and 0.4 kWh/kg.

In a preferred embodiment, the average filling degree of the aforementioned continuous mixer used for the addition of at least one part of resin after the completion step is comprised between 10% and 50%.

The expression "filling degree", is used to indicate the average ratio between the volume occupied by the elastomeric material in the extrusion chamber, delimited by the extrusion screws and by the inner walls of the housing of such screws in the extruder, and the total volume of such a chamber. The average filling degree is indicative of the continuous mixer ability to handle the amount of material that it receives at the inlet.

According to a preferred embodiment, the mixing by means of continuous mixers, as an alternative to discontinuous ones, is carried out at generally higher temperatures of the material being processed, comprised between 140°C and 200°C with respect to the continuous mixer used for the addition of at least one part of resin after the completion step illustrated above.

According to a further preferred embodiment, the mixing by means of continuous mixers, as an alternative to discontinuous ones, is carried out at generally higher speeds of the screw, comprised between 80 rpm and 400 rpm, with respect to the continuous mixer used after the completion step illustrated above.

The process according to the present invention for producing a tread compound including at least one resin in a total amount higher than 20 phr, can be carried out by means of a plant comprising:
- at least one mixing apparatus comprising at least one discontinuous mixer and/or at least one continuous mixer, configured to receive the components of a first elastomeric compound comprising at least one elastomeric polymer, at least one reinforcing filler, at least one vulcanizing agent and optionally at least one resin;
- at least one continuous mixer comprising a housing, at least two screws rotatably mounted in said housing or, in the case of a planetary rollers mixer, at least two blades rotatably mounted in said housing rotating about their own axis and about a common axis, said housing including at least one feeding opening and a discharge opening, and being configured to receive said first elastomeric compound and at least one part of at least one resin and to obtain a tread compound.

Preferably, said at least one discontinuous mixer comprises at least one internal mixer and at least one open mixer, said at least one open mixer being arranged downstream of said at least one internal mixer.

The ingredients present in the elastomeric compound are weighed and dosed in predetermined proportions within the mixing devices.

Preferably, feeding to a continuous mixer is carried out by means of a dosing device, preferably a gravimetric dosing device.

Preferably, the aforementioned mixing apparatus comprises at least one discontinuous mixer or at least one first discontinuous mixer and at least one second discontinuous mixer arranged downstream of said first discontinuous mixer.

Preferably, the aforementioned mixing apparatus comprises at least one discontinuous mixer and at least one continuous mixer arranged downstream of said discontinuous mixer.

The transport of the elastomeric compound between the various continuous mixers can be carried out according to any known process, for example by means of a conveyor belt.

Preferably, the aforementioned plant further comprises at least one grinding device to obtain a subdivided product. Preferably, said at least one grinding device is a granulator or a grinding mill.

Preferably, in the embodiment in which the mixing apparatus comprises at least one discontinuous mixer and at least one continuous mixer, the first elastomeric compound can be directly granulated at the end of the extrusion step of the continuous mixer by equipping the extrusion head with a perforated extrusion die, generally provided with cutting means, through which the first elastomeric compound is made to pass.

Preferably, the aforementioned plant further comprises at least one cooling device.

The term "high speed", is used to indicate speeds that can exceed 200 km/h up to over 300 km/h.

The term "extreme manoeuvres", is used to indicate a continuous series of manoeuvres of changing direction, braking and acceleration carried out at the maximum possible speed with respect to the route and the conditions of the road surface.

For example, in case of competitions taking place in favourable atmospheric conditions and therefore on a dry road surface, the vehicles are equipped with tyres (slick tyres) provided with tread without grooves and made of particularly "soft" compounds, and the operating temperatures exceed 70°C and can even reach 140°C.

### Brief description of the figures

Additional features and advantages of the invention will become more readily apparent from the following description of some preferred embodiments thereof, made hereinafter, for illustrating and non-limiting purposes, with reference to the attached drawings. In such drawings:
- figure 1 is a schematic diagram of a plant for producing tread compounds according to the process of the present invention;
- figure 2 is a schematic diagram of a further plant for producing tread compounds according to the process of the present invention;
- figure 3 illustrates a tyre for vehicle wheels in radial semi-section;
- figure 4 illustrates a comparison of tan delta curves (loss factor) as a function of temperature obtained by means of Dynamic Mechanical Thermal Analysis - DMTA of samples of the compound;
- figure 5 illustrates a comparison of shear modulus curves as a function of the temperature obtained by means of Dynamic Mechanical Thermal Analysis - DMTA of samples of the compound.

### Detailed description of the currently preferred embodiments

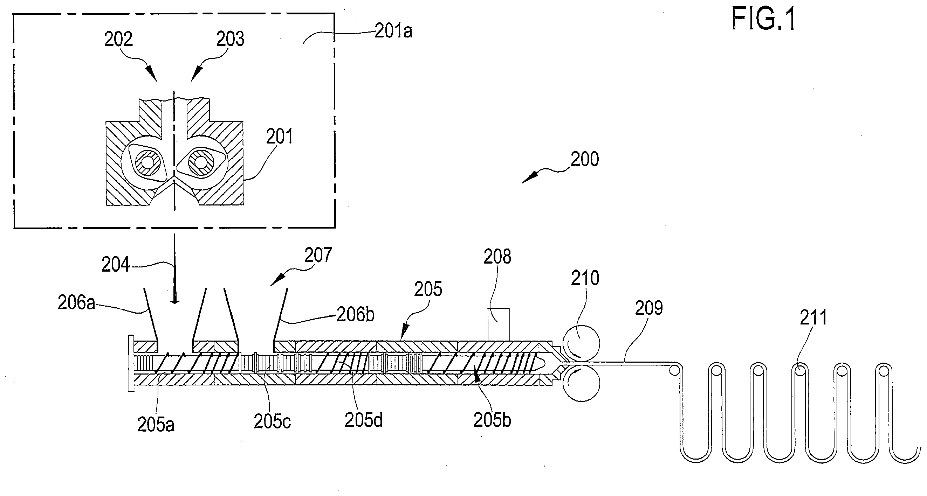

With reference to figure 1, a plant (200) for producing a tread compound according to the process of the present invention includes a mixing apparatus (201a) comprising at least one discontinuous mixer (201) (for example a Banbury®) to which at least the elastomeric polymer and at least one reinforcing filler (202) is fed.

Preferably, all of the remaining components (203) of the first elastomeric compound (with the exception of at least one part of resin) can be fed to the discontinuous mixer (201).

Preferably, the mixing in said at least one discontinuous mixer (201) can be carried out in at least two steps.

In such a preferred embodiment, a first step is carried out in which at least one elastomeric polymer and at least one reinforcing filler are fed, and a second step is carried out in which at least one vulcanizing agent and optionally a further part of at least one resin are fed.

Preferably, in the first and/or in the second step all of the other components of the first elastomeric compound are also fed excluding at least one part of at least one resin and optionally at least one part of plasticizing oils.

Preferably, the aforementioned at least two steps are carried out in the discontinuous mixer (201).

Preferably, said at least two mixing steps can be carried out in sequence in at least one first discontinuous mixer (201) and in at least one second discontinuous mixer (not shown in figure 1).

According to a preferred embodiment, said mixing apparatus (201a) comprising at least one discontinuous mixer (201), preferably an internal mixer, further comprises at least one open mixer (not shown in figure 1) being preferably arranged downstream of said internal mixer (201).

After having mixed and dispersed the components of the first elastomeric compound (204), the latter is discharged from the mixing apparatus (201a) and fed to a continuous mixer (205) (for example a co-rotating twin-screw extruder) by means of a feeding hopper (206a).

The continuous mixer (205) illustrated in figure 1 comprises a cylindrical chamber (205a) in which a pair of worm screws (205b) rotate (for example two counter-rotating interpenetrating screws, only one of which is visible in figure 1). Figure 1 illustrates the mixing and redistribution portions (205c) of the screw (205b), capable of imparting to the compound a high shear stress, as well as the axial displacement portions (205d).

Preferably, said first elastomeric compound (204) can be obtained in the form of a subdivided product for example by means of a grinding device (not shown in figure 1). The first elastomeric compound (204) can be fed directly, without being cooled, to the continuous mixer (205).

Preferably, said first elastomeric compound (204) can be cooled, below 110-100°C, preferably to a temperature close to room temperature (for example to temperatures comprised between 20°C and 40°C), by passing the same through a cooling device (not shown in figure 1) before being fed to said continuous mixer (205).

Preferably, the at least one part of solid resin (207) can be fed together with said first elastomeric compound by means of the hopper (206a). The continuous mixer (205) of figure 1 shows a second feeding hopper (206b) for feeding, for example, at least one part of solid resin (207). Moreover, the continuous mixer (205) can be provided with controlled gravimetric feeding pumps (not shown in figure 1) that are used to introduce liquid components such as, for example, liquid resins and/or plasticizing oils into the continuous mixer (205).

The continuous mixer (205) can optionally be provided with a venting unit (208) to allow venting of the gases that can develop during the mixing of the elastomeric compound.

Preferably, more than one venting unit can be present along the continuous mixer (205) (not shown in figure 1).

Once the mixing has been carried out, the tread compound (209) is discharged from the continuous mixer (205), for example in the form of a continuous strip, by pumping the same through a roller extrusion matrix (210), for example by means of a gear pump (not shown in figure 1), and is then cooled, preferably to room temperature, by passing the same through a cooling device (211).

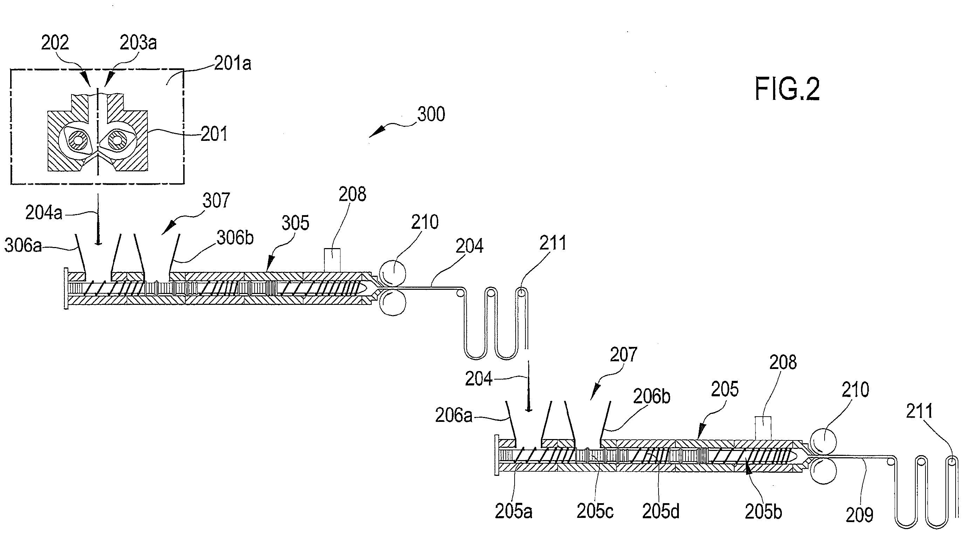

Figure 2 shows a plant (300) for producing a tread compound according to the process of the present invention: the same reference numerals have the same meanings given in figure 1.

It should be understood that all the alternatives described above with reference to figure 1 also apply with reference to figure 2.

With reference to figure 2, a plant (300) for producing a tread compound according to the process of the present invention includes a mixing apparatus (201a) comprising a discontinuous mixer (201) as described above in figure 1 to which at least the elastomeric polymer and at least the reinforcing filler (202) are fed.

Preferably, all of the remaining components (203a) of the first elastomeric compound (with the exception of the vulcanizing agents, activators, accelerators and at least one part of the at least one resin) can be fed to the discontinuous mixer (201).

In this embodiment of the process, an intermediate elastomeric compound (204a) is obtained during the first mixing step which compound can be fed to a first continuous mixer (305) (for example a co-rotating twin-screw extruder) by means of a feeding hopper (306a).

Preferably, said intermediate elastomeric compound (204a) can be obtained in the form of a subdivided product as described above with reference to figure 1.

The first continuous mixer (305) of figure 2 comprises a second feeding hopper (306b) to feed, for example, the vulcanising agents and/or the activators and/or the accelerators (307).

Generally, the ingredients of the recipe are fed to different zones of the continuous mixer by means of one or more feeding hoppers (306b). Moreover, some ingredients of the recipe can be fed to the continuous mixer more than once.

Preferably, each ingredient of the recipe is provided with a dedicated dosing device (not shown in figure 2).

Preferably, a plurality of different ingredients of the recipe can be dosed by means of the same dosing device.

Preferably, the dosing device is a loss-in-weight gravimetric feeder.

Once the second mixing has been carried out, the first elastomeric compound obtained (204) is fed to a second continuous mixer (205) by means of a feeding hopper (206a) as described for figure 1.

Preferably, said first elastomeric compound (204) can be obtained in the form of a subdivided product by pumping the same through an extrusion head (not shown in figure 2) by means of a gear pump (not shown in figure 2) through which the first elastomeric compound is made to pass, said extrusion head being provided with a perforated extrusion die equipped with knives.

The product obtained in subdivided form can then be cooled, preferably to a temperature close to room temperature (for example between 20°C and 40°C), for example by transporting the same to a cooling device (not shown in figure 2).

The transfer of the first elastomeric compound from the first to the second continuous mixer can be carried out according to any known process.

The granulated first elastomeric compound is conveyed, for example by means of a conveyor belt, to a loss-in-weight gravimetric feeder (not shown in figure 2) that doses and feeds the same to the second continuous mixer (205) by means of a feeding hopper (206a).

The second continuous mixer (205) of figure 2 comprises a second feeding hopper (206b) for feeding, for example, at least one part of the at least one resin (207).

Once the three mixing operations have been carried out, the tread compound (209) is discharged from the second continuous mixer (205), for example in the form of a continuous strip, by pumping the same through a roller extrusion matrix (210), for example by means of a gear pump (not shown in figure 2), and is then cooled, preferably to a temperature close to room temperature (for example between 20°C and 40°C), by passing the same through a cooling device (211). Preferably, the continuous mixer (205) and/or (305) illustrated in figures 1-2 can be of the multi-screw ring type or planetary roller type.

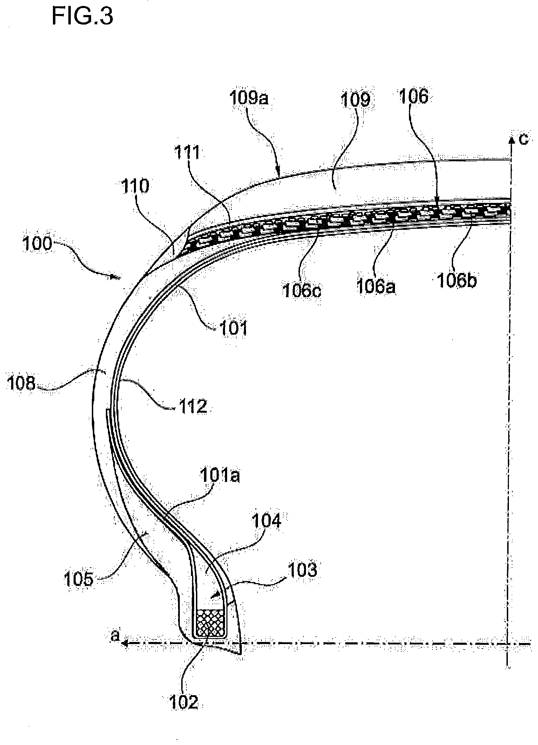

With reference to figure 3 "a" indicates an axial direction and "r" indicates a radial direction. For the sake of simplicity, figure 3 just shows a portion of the tyre, the remaining unrepresented portion being identical and arranged symmetrically with respect to the radial direction "r".

Reference numeral (100) in figure 3 indicates a high and ultra-high performance tyre for vehicle wheels produced according to the process according to the invention and formed by a plurality of structural elements.

The tyre (100) for four-wheeled vehicles comprises at least one carcass structure, comprising at least one carcass layer (101) having respectively opposite end flaps engaged with respective annular anchoring structures (102), called bead cores, possibly associated with a bead filler (104). The area of the tyre comprising the bead core (102) and the filler (104) forms an annular reinforcing structure (103), the so-called bead, intended for anchoring the tyre on a corresponding mounting rim, not illustrated.

The carcass structure is usually of the radial type, i.e. the reinforcing elements of the at least one carcass layer (101) are on planes comprising the rotation axis of the tyre and substantially perpendicular to the equatorial plane of the tyre. Said reinforcing elements generally consist of textile cords, for example rayon, nylon, polyester (for example polyethylene naphthalate (PEN)). Each annular reinforcing structure is associated to the carcass structure by folding back of the opposite lateral edges of the at least one carcass layer (101) around the annular anchoring structure (102) so as to form the so-called folds of the carcass (101a) as illustrated in figure 3.

In an embodiment, the coupling between carcass structure and annular reinforcing structure can be provided by means of a second carcass layer (not shown in figure 3) applied at an axially outer position with respect to the first carcass layer.

An anti-abrasion strip (105) is arranged at an outer position with respect to each annular reinforcing structure (103). Preferably, each anti-abrasion strip (105) is arranged at least at an axially outer position with respect to the annular reinforcing structure (103) extending at least between the sidewall (108) and the radially lower portion at the annular reinforcing structure (103).

Preferably, the anti-abrasion strip (105) is arranged so as to surround the annular reinforcing structure (103) along the axially inner and axially outer zone and along the radially lower zone of the annular reinforcing structure (103) so as to be arranged between the latter and the wheel rim when the tyre (100) is mounted thereon.

A belt structure (106), comprising one or more belt layers (106a), (106b) radially superimposed to one another and with respect to the carcass layer, having reinforcing cords that are typically metallic, is associated to the carcass structure. Such reinforcing cords can have a crossed orientation with respect to a direction of circumferential development of the tyre (100). The term "circumferential" direction, is used to indicate a direction generically oriented along the direction of rotation of the tyre.

At least one zero degrees reinforcing layer (106c), commonly known as "0° belt", which generally incorporates a plurality of reinforcing cords, typically textile cords, oriented along a substantially circumferential direction, thus forming an angle of a few degrees (for example an angle between about 0° and 6°) with respect to the equatorial plane of the tyre, and coated with an elastomeric material, may be applied at a radially outer position with respect to the belt layers (106a), (106b).

At a radially outer position with respect to the belt structure (106) a tread band (109) is applied which is made of an elastomeric compound produced according to the process of the present invention, as well as other semi-finished products constituting the tyre (100).

On the lateral surfaces of the carcass structure, each extending from one of the lateral edges of the tread (109) up to the respective annular reinforcing structure (103), respective sidewalls (108) made of elastomeric material are also applied at an axially outer position.

At a radially outer position, the tread band (109), the compound of which is produced by means of the process described above, has a rolling surface (109a) intended to come in contact with the ground. In the case of tyres for use on a dry track the rolling surface is smooth as represented in figure 3. For conventional road tyres, or for use on a wet track or for rain tyres, circumferential and/or transversal grooves are generally made, (not shown in figure 3), possibly configured so as to define a plurality of blocks, of various shapes and sizes distributed over the rolling surface (109a).

A sub-layer (111) is arranged between the belt structure (106) and the tread band (109).

A strip consisting of elastomeric material (110), commonly known as "mini-sidewall", may optionally be present in the connection area between the sidewalls (108) and the tread band (109), this mini-sidewall being generally obtained by co-extrusion with the tread band (109) and allowing an improvement of the mechanical interaction between the tread band (109) and the sidewalls (108). Preferably, the end portion of the sidewall (108) directly covers the lateral edge of the tread band (109).

Typically, a rubber layer (112), generally known as "liner", which provides the necessary sealing action towards the inflation air of the tyre, can also be foreseen at a radially inner position with respect to the carcass layer (101).

The building of the tyre (100) as described above, can be carried out by assembling respective semi-finished products on a forming drum, not illustrated, by means of at least one assembling device.

At least part of the components intended to form the carcass structure of the tyre may be built and/or assembled on the forming drum. More specifically, the forming drum is configured to firstly receive the optional liner, and then the carcass structure. Thereafter, devices that are not illustrated coaxially engage, around each of the end flaps, one of the annular anchoring structures, arrange an outer sleeve comprising the belt structure and the tread band at a position coaxially centred around the cylindrical carcass sleeve and shape the carcass sleeve according to a toroidal configuration by radially expanding the carcass structure, so as to determine its application against a radially inner surface of the outer sleeve.

Once the green tyre has been built, a moulding and vulcanization treatment is carried out aimed at obtaining the structural stabilization of the tyre by cross linking the elastomeric compounds as well as at imparting to the tread band a desired tread pattern and at applying possible identifying graphical markings to the sidewalls.

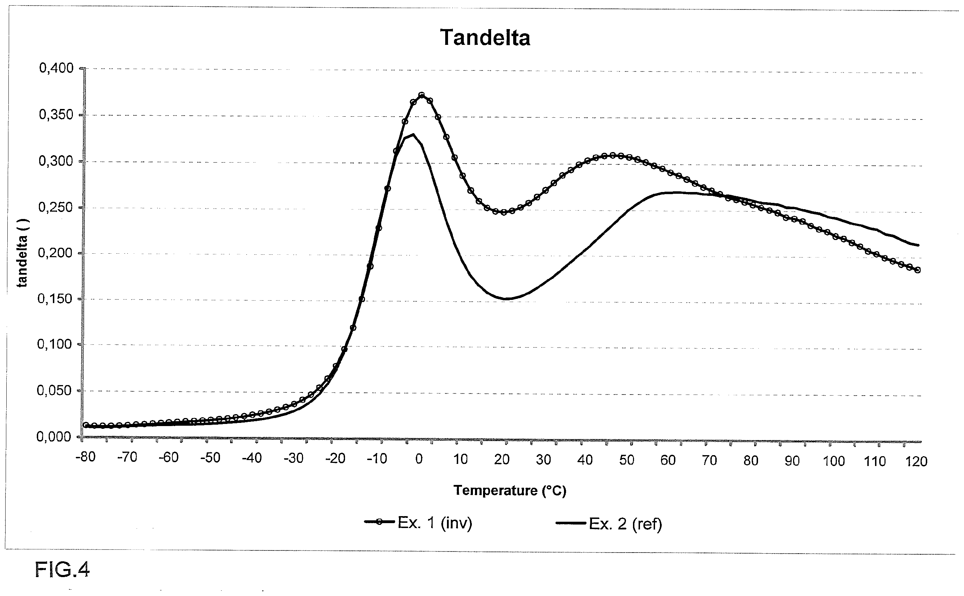

Figure 4 shows a comparison between tan delta curves as a function of temperature. The curves were obtained by subjecting to a Dynamic Mechanical Thermal Analysis - DMTA a sample of compound (Ex. 1) obtained with a process according to the invention and a sample of a reference compound (Ex. 2) obtained with a conventional process.

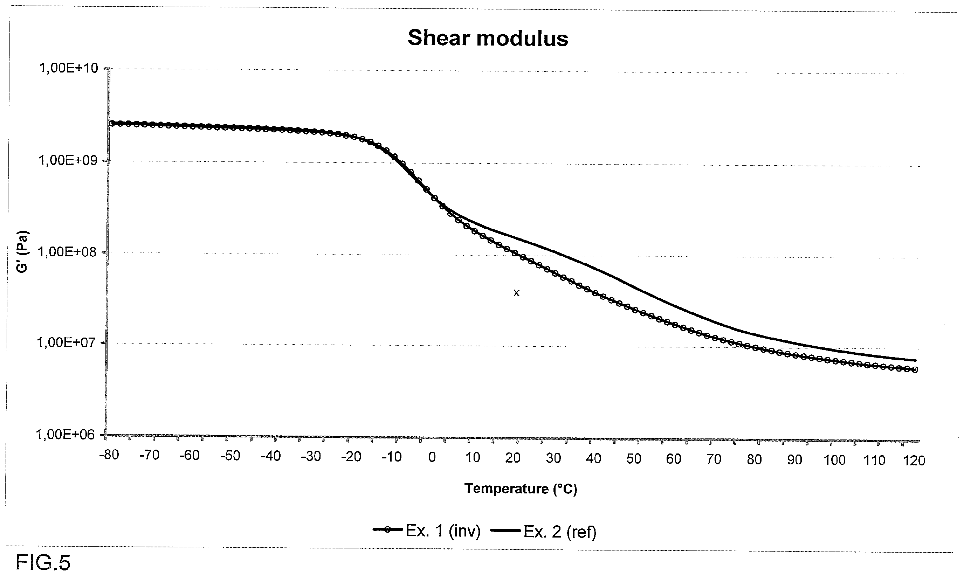

Figure 5 shows a comparison between shear modulus curves as a function of temperature The curves were obtained by subjecting to a Dynamic Mechanical Thermal Analysis - DMTA a sample of compound (Ex. 1) obtained with a three-step mixing process according to the invention and a sample of a reference compound (Ex. 2) obtained with a conventional three-step mixing process.

By means of the Dynamic Mechanical Thermal Analysis the temperature-dependent visco-elastic properties of the compound subjected to vulcanization (10 min at 170°C) were recorded and the elastic and dissipative shearing moduli G' and G" and their ratio (tan delta) were determined as a function of temperature.

The instrument used is a DMTA instrument from the Company Rheometrics that works under torsion conditions.

The test includes a dynamic characterisation as a function of temperature, the conditions of the temperature ramp are from -80°C to 120°C with a ramp of 2°C/min, for each point G', G" and tan Delta were measured with a dynamic test under sinusoidal conditions at a frequency of 1Hz and dynamic amplitude of ± 0.1%.

The test piece is a vulcanized strip having a thickness of 2 mm, a width of 12 mm and a length of 24 mm (useful portion).

### EXAMPLE 1 (invention)

A tread compound was produced according to the schematic production process of figure 1.

Said tread compound was prepared using the recipe given below in Table 1.

**Table 1**

| Ingredients | phr |
|---|---|
| carbon black | 98 |
| N-cyclohexyl-2-benzothiazole sulphenamide (CBS) | 2.8 |
| Tetraisobutyl thiuram disulphide (TIBTD) | 0.5 |
| Sulphur | 1.5 |
| Styrene resin | 18 |
| Phenolic resin | 30 |
| Anti-oxidant (6PPD) | 5 |
| Elastomeric polymer (S-SBR) | 100 |
| Zinc oxide | 2 |
| Stearic acid | 2 |
| Zinc salts from fatty acids | 2 |
| Bis(triethoxysilylpropyl)polysulphide | 1 |

Carbon black: Vulcan 1391 (Cabot)
CBS: Santocure CBS (Lanxess)
TIBTD: Isobutyl Tuads (R.T.Vanderbilt)
Sulphur: Agrindustria
Styrene resin: Novares TT90 (Ruetgers GmbH)
Phenolic resin: SMD 31144 (SI- Group)
6PPD: Santoflex 6PPD (Solutia)
ZnO: Rhenogran ZnO (Rhein Chemie)
Zinc salts from fatty acids: Polyplastol 6 (Eigenmann *&* Veronelli S.p.A.)
Bis(triethoxysilylpropyl)polysulphide: Silane Evonik X50S (Evonik)

### First step

All the ingredients listed in table 1, except for sulphur, the accelerators (CBS and TIBTD) and the resins, were mixed together in a Banbury® (model Pomini 11D), which operates at the following working conditions:
capacity : 200 1
load: 180-190 kg;
discharge temperature: 140-150°C;
mixing time: 5 minutes;
rotor speed: 40 rpm.

The compound produced in the discontinuous Banbury® mixer was then discharged and fed to an open mixer (open mill model Buzuluk 26" x 84"), which operates at the following working conditions:
rotors speed: 10-15 rpm;
mixing time: 5 minutes.

### Second step

The intermediate elastomeric compound obtained in step 1, the sulphur, the accelerators and the styrene resin were then fed to the same Banbury® described above with reference to step 1 and subjected to a further mixing step at the following working conditions:
load: 180-190 kg;
discharge temperature: 100°C;
mixing time: 2-2.5 minutes;
rotor speed: 25-30 rpm.

The compound produced in the discontinuous Banbury® mixer was then discharged and fed to the same open mixer described above with reference to step 1, which operates at the following working conditions:
rotor speed: 10-15 rpm;
mixing time: 3 minutes.

### Third step

The first elastomeric compound obtained at the end of step 2 and the phenolic resin were then fed to a continuous co-rotating twin-screw mixer having a cylinder diameter of 40 mm and a L/D ratio equal to 48 (model Maris TM40HT) and subjected to a final mixing step at the following working conditions:
feed flow rate: 70 kg/h;
temperature of the compound leaving the extruder: 133°C;
speed of the screws: 220 rpm;
filling degree: 77%
specific energy: 0.22 kWh/kg.

### EXAMPLE 2 (reference)

A reference tread compound was produced according to a conventional production process.

Said reference tread compound was prepared using the recipe given in Table 1 operating according to the mixing steps 1 and 2 described above.

### Third step

The first elastomeric compound obtained at the end of step 2 and the phenolic resin were then fed to the same Banbury® described above with reference to steps 1 and 2 and subjected to a final mixing step at the following working conditions:
load: 180-190 kg;
discharge temperature: 100°C;
mixing time: 2-2.5 minutes;
rotor speed: 25-30 rpm.

The compound produced in the discontinuous Banbury® mixer was then discharged and fed to the same open mixer described above with reference to step 1, which operates at the following working conditions:
rotor speed: 10-15 rpm;
mixing time: 3 minutes

Elastomeric polymers have glass transition temperatures (Tg) usually at negative temperatures; on the other hand, resins have softening points (Tg) at high temperatures.

From the tan deltas (loss factor) graph of figure 4, it can be seen that for the reference compound obtained with a conventional process (Ex. 2) the two peaks determined by the two Tg (that of the elastomeric polymer and that of the resin) are farther apart: the resins thus appear segregated from the elastomeric polymer. The curve of example 1 according to the invention, on the contrary, shows how the two peaks determined by the two Tg (that of the elastomer and that/those of the resins) are closer with respect to each other, thus tending towards a single-phase compound, in which the two different resins are more evenly interspersed and more finely dispersed within the elastomeric matrix.

The widened peak of the compound of resins (temperature range from about 50°C to about 80-90°C) is narrower in the case of the example according to the invention, and this is an indication of a more intimate mixing between the two different resins.

Advantageously, the compound obtained according to the process of the invention (ex. 1) thus shows an improved mixing both between the different resins and between the resins and the elastomeric matrix.

The tan delta peaks of the elastomeric polymer and of the resins of example 1 are higher with respect to those of the reference example since the resins, which are hysteresis carriers, being more finely dispersed within the elastomeric polymer, cause a tan delta increase of the polymeric phase (first peak in a temperature range comprised between - 30 and 10°C).

From the graph of the shear moduli of figure 5, it can be seen that at negative temperatures, wherein the elastomeric matrix is completely rigid, practically up to the Tg of the elastomeric polymers it is not possible to distinguish the two phases (indeed, the two curves overlap). Once the Tg of the elastomeric polymer is exceeded and the elastomeric matrix becomes more elastic, the two tested tread compounds behave differently.

In particular, in the reference tread compound (Ex. 2) which has a higher modulus, a stiffness contribution is in fact evidenced due to the stiff islands of resin which are segregated within the same. On the other hand, in the case of the compound obtained according to the process of the invention (Ex. 1) it is possible to see the typical behaviour of a single-phase compound, in which the effect of the rigid islands of resin is lower and consequently the modulus is lower.

Advantageously, a lower modulus together with a higher tan delta value of the tread compound allows to obtain a better performance in terms of grip, traction and/or road holding of the tyre that includes the same.

By means of the process according to the invention it is also possible to manage, without limitations in terms of productivity, the high tackiness that contributes to improve the performance thanks to the possibility of obtaining a first elastomeric compound that is a little sticky and thus easier to dose into the continuous mixer together with part of the resin.

Clearly, a man skilled in the art may introduce modifications and variants to the invention described hereinbefore in order to meet specific and contingent application requirements, variants and modifications which anyway fall within the scope of protection as defined in the attached claims.

## Claims

1. Process for producing a tyre for vehicle wheels, comprising:
a) producing a green tyre comprising a tread band applied in a radially outer position of the tyre;
b) subjecting said green tyre to moulding and vulcanization in order to obtain a finished tyre,
wherein said tread band comprises at least one tread compound, including at least one resin in a total amount higher than 20 phr, said tread compound being produced by:
- feeding at least one mixing apparatus comprising at least one discontinuous mixer and/or at least one continuous mixer with at least the following components of a first elastomeric compound: at least one elastomeric polymer, at least one reinforcing filler and at least one vulcanizing agent;
- obtaining said first elastomeric compound by means of at least two steps of mixing and dispersing of said components;- discharging said first elastomeric compound from said mixing apparatus;
- feeding at least one continuous mixer with said first elastomeric compound and at least one part of said amount of at least one resin, wherein said at least one continuous mixer is a two screws or a multiple screws type, co-rotating, interpenetrating, self-cleaning or it is a planetary rollers extruder;
- mixing and dispersing said at least one part of said amount of at least one resin in said first elastomeric compound by means of said at least one continuous mixer so as to obtain said tread compound;
- discharging said tread compound from said at least one continuous mixer.

2. Process for producing a tyre according to claim 1, wherein said at least two steps of mixing and dispersing are carried out in succession in:
- at least one discontinuous mixer;
- at least one first discontinuous mixer and at least one second discontinuous mixer arranged downstream of said first discontinuous mixer; or
- at least one discontinuous mixer and at least one continuous mixer arranged downstream of said discontinuous mixer.

3. Process for producing a tyre according to any one of claims 1 to 2, comprising further reducing said first compound into a subdivided product.

4. Process for producing a tyre according to any one of claims 1 to 3, comprising further cooling said first compound.

5. Process for producing a tyre according to any one of claims 1 to 4, comprising further feeding said at least one mixing apparatus with at least one further part of said at least one resin.

6. Process for producing a tyre according to claim 5, wherein said at least one further part of said at least one resin is fed into said at least one mixing apparatus in an amount equal to or lower than 20 phr.

7. Process for producing a tyre according to any one of claims 1 to 6, wherein said at least one resin is selected from the group comprising: hydrocarbon resins, synthetic resins, resins derived from petroleum, phenol-based resins, carbon-based resins, xylene-based resins, natural resins and their mixtures.

8. Process for producing a tyre according to any one of claims 1 to 7, wherein the total amount of resin in the tread compound is lower than 60 phr, preferably comprised between 25 phr and 55 phr, more preferably comprised between 30 phr and 50 phr.

9. Process for producing a tyre according to any one of claims 1 to 8, wherein
feeding at least one continuous mixer with said first elastomeric compound and at least one part of said at least one resin comprises feeding at least 15 phr of said at least one resin.

10. Process for producing a tyre according to any one of claims 1 to 9, further comprising feeding said at least one mixing apparatus with at least one ingredient selected from: silane coupling agents, additives, plasticizers and their mixtures.

11. Process for producing a tyre according to any one of claims 1 to 10, wherein said at least one discontinuous mixer is selected from an internal mixer or an open mixer.

12. Process for producing a tyre according to any one of claims 1 to 11, wherein said at least one continuous mixer is a two screws or a multiple screws type or having a plurality of blades in the case of a planetary rollers mixer and wherein mixing and dispersing said at least one part of at least one resin by means of said at least one continuous mixer are carried out at a rotation speed of the screws or blades comprised between 40 and 400 rpm, preferably between 50 and 250 rpm.

13. Process for producing a tyre according to any one of claims 1 to 12, wherein mixing and dispersing said at least one part of at least one resin by means of said at least one continuous mixer are carried out at a temperature comprised between 110°C and 140°C.

## Patentansprüche

1. Verfahren zur Herstellung eines Reifens für Fahrzeugräder, wobei das Verfahren umfasst:
a) Herstellen eines Rohreifens umfassend einen Laufflächenring, der in einer radial äußeren Position des Reifens angelegt ist;
b) Unterziehen des Rohreifens einer Formgebung und Vulkanisierung, um einen fertigen Reifen zu erhalten,
wobei der Laufflächenring zumindest eine Laufflächenverbindung umfasst, die zumindest ein Harz in einer Gesamtmenge von mehr als 20 phr umfasst, wobei die Laufflächenverbindung hergestellt wird durch:
- Speisen einer Mischvorrichtung umfassend zumindest einen diskontinuierlichen Mischer und/oder zumindest einen kontinuierlichen Mischer mit zumindest den folgenden Komponenten einer ersten Elastomerverbindung: zumindest einem elastomeren Polymer, zumindest einem verstärkenden Füllstoff und zumindest einem Vulkanisationsmittel;
- Erhalten der ersten Elastomerverbindung mittels zumindest zweier Schritte zur Mischung und Dispergierung der Komponenten;
- Ausgeben der ersten Elastomerverbindung aus der Mischvorrichtung;
- Speisen zumindest eines kontinuierlichen Mischers mit der ersten Elastomerverbindung und zumindest einem Teil der Menge des zumindest einen Harzes, wobei der zumindest eine kontinuierliche Mischer vom Zweischrauben- oder Mehrschraubentyp mit gemeinsam drehenden und sich durchdringenden und selbstreinigenden Schrauben ist, oder ein Planetenwalzenextruder ist;
- Mischen und Dispergieren des zumindest einen Teils der Menge des zumindest einen Harzes in der ersten Elastomerverbindung mittels des zumindest einen kontinuierlichen Mischers, um so die Laufflächenverbindung zu erhalten;
- Ausgeben der Laufflächenverbindung aus dem zumindest einen kontinuierlichen Mischer.

2. Verfahren zur Herstellung eines Reifens nach Anspruch 1, wobei die zumindest zwei Schritte zur Mischung und Dispergierung der Reihe nach in:
- zumindest einem diskontinuierlichen Mischer;
- zumindest einem ersten diskontinuierlichen Mischer und zumindest einem zweiten diskontinuierlichen Mischer, der stromabwärts des ersten diskontinuierlichen Mischers angeordnet ist; oder
- zumindest einem diskontinuierlichen Mischer und zumindest einem kontinuierlichen Mischer, der stromabwärts des diskontinuierlichen Mischers angeordnet ist,
durchgeführt werden.

3. Verfahren zur Herstellung eines Reifens nach einem der Ansprüche 1 bis 2, des Weiteren umfassend das Reduzieren der ersten Verbindung in ein geteiltes Produkt.

4. Verfahren zur Herstellung eines Reifens nach einem der Ansprüche 1 bis 3, des Weiteren umfassend das Kühlen der ersten Verbindung.

5. Verfahren zur Herstellung eines Reifens nach einem der Ansprüche 1 bis 4, ferner umfassend das Speisen der zumindest einen Mischvorrichtung mit zumindest einem weiteren Teil des zumindest einen Harzes.

6. Verfahren zur Herstellung eines Reifens nach Anspruch 5, wobei der zumindest eine weitere Teil des zumindest einen Harzes in die zumindest eine Mischvorrichtung in einer Menge gleich oder weniger als 20 phr eingespeist wird.

7. Verfahren zur Herstellung eines Reifens nach einem der Ansprüche 1 bis 6, wobei das zumindest eine Harz ausgewählt ist aus der Gruppe umfassend: Kohlenwasserstoffharze, synthetische Harze, aus Petroleum abgeleitete Harze, phenolbasierte Harze, kohlenstoffbasierte Harze, xylenbasierte Harze, natürliche Harze und deren Mischungen.

8. Verfahren zur Herstellung eines Reifens nach einem der Ansprüche 1 bis 7, wobei die Gesamtmenge an Harz in der Laufflächenverbindung weniger als 60 phr beträgt, vorzugsweise zwischen 25 phr und 55 phr, noch bevorzugter zwischen 30 phr und 50 phr.

9. Verfahren zur Herstellung eines Reifens nach einem der Ansprüche 1 bis 8, wobei das Speisen des zumindest einen kontinuierlichen Mischers mit der ersten Elastomerverbindung und zumindest einem Teil des zumindest einen Harzes das Einspeisen von zumindest 15 phr des zumindest einen Harzes umfasst.

10. Verfahren zur Herstellung eines Reifens nach einem der Ansprüche 1 bis 9, ferner umfassend das Speisen der zumindest einen Mischvorrichtung mit zumindest einem Bestandteil ausgewählt aus: Silanhaftvermittlern, Additiven, Weichmachern und deren Mischungen.

11. Verfahren zur Herstellung eines Reifens nach einem der Ansprüche 1 bis 10, wobei der zumindest eine diskontinuierliche Mischer ausgewählt ist aus einem Innenmischer und einem offenen Mischer.

12. Verfahren zur Herstellung eines Reifens nach einem der Ansprüche 1 bis 11, wobei der zumindest eine kontinuierlichen Mischer ein Zweischnecken- oder ein Mehrschneckentyp ist, oder im Fall eines Planetenwalzenmischers eine Vielzahl von Klingen aufweist, und wobei das Mischen und Dispergieren des zumindest einen Teils des zumindest einen Harzes durch den zumindest einen kontinuierlichen Mischer bei einer Schnecken- oder Klingendrehzahl von zwischen 40 und 400 U/min, vorzugsweise zwischen 50 und 250 U/min, erfolgen.

13. Verfahren zur Herstellung eines Reifens nach einem der Ansprüche 1 bis 12, wobei das Mischen und Dispergieren des zumindest einen Teils des zumindest einen Harzes mittels des zumindest einen kontinuierlichen Mischers bei einer Temperatur zwischen 110 °C und 140 °C erfolgen.

## Revendications

1. Procédé de fabrication d'un pneu pour roues de véhicule, comprenant le fait :
a) de fabriquer un pneu cru comprenant une bande de roulement appliquée dans une position radialement extérieure du pneu ;
b) de soumettre ledit pneu cru à un moulage et à une vulcanisation afin d'obtenir un pneu fini,
dans lequel ladite bande de roulement comprend au moins un mélange pour bande de roulement, comportant au moins une résine en une quantité totale supérieure à 20 phr, ledit mélange pour bande de roulement étant fabriqué :
- en alimentant au moins un appareil de mélange comprenant au moins un mélangeur discontinu et/ou au moins un mélangeur continu en au moins les composants suivants d'un premier composé élastomère : au moins un polymère élastomère, au moins une charge renforçante et au moins un agent de vulcanisation ;
- en obtenant ledit premier composé élastomère par au moins deux étapes de mélange et de dispersion desdits composants ;
- en évacuant ledit premier composé élastomère dudit appareil de mélange ;
- en alimentant au moins un mélangeur continu en ledit premier composé élastomère et en au moins une partie de ladite quantité d'au moins une résine, où ledit au moins un mélangeur continu est du type à deux vis ou à vis multiples, en co-rotation, interpénétrant, autonettoyant ou il est une extrudeuse à vis planétaires ;
- en mélangeant et en dispersant ladite au moins une partie de ladite quantité d'au moins une résine dans ledit premier composé élastomère au moyen dudit au moins un mélangeur continu de manière à obtenir ledit mélange pour bande de roulement ;
- en évacuant ledit mélange pour bande de roulement dudit au moins un mélangeur continu.

2. Procédé de fabrication d'un pneu selon la revendication 1, dans lequel lesdites au moins deux étapes de mélange et de dispersion sont réalisées successivement dans :
- au moins un mélangeur discontinu ;
- au moins un premier mélangeur discontinu et au moins un deuxième mélangeur discontinu agencé en aval dudit premier mélangeur discontinu ; ou
- au moins un mélangeur discontinu et au moins un mélangeur continu agencé en aval dudit mélangeur discontinu.

3. Procédé de fabrication d'un pneu selon l'une quelconque des revendications 1 et 2, comprenant en outre la réduction dudit premier composé en un produit subdivisé.

4. Procédé de fabrication d'un pneu selon l'une quelconque des revendications 1 à 3, comprenant en outre le refroidissement dudit premier composé.

5. Procédé de fabrication d'un pneu selon l'une quelconque des revendications 1 à 4, comprenant en outre l'alimentation dudit au moins un appareil de mélange en au moins une partie supplémentaire de ladite au moins une résine.

6. Procédé de fabrication d'un pneu selon la revendication 5, dans lequel ladite au moins une partie supplémentaire de ladite au moins une résine est introduite dans ledit au moins un appareil de mélange en une quantité inférieure ou égale à 20 phr.

7. Procédé de fabrication d'un pneu selon l'une quelconque des revendications 1 à 6, dans lequel ladite au moins une résine est choisie dans le groupe comprenant : des résines hydrocarbonées, des résines synthétiques, des résines dérivées du pétrole, des résines à base de phénol, des résines à base de carbone, des résines à base de xylène, des résines naturelles et leurs mélanges.

8. Procédé de fabrication d'un pneu selon l'une quelconque des revendications 1 à 7, dans lequel la quantité totale de résine dans le mélange pour bande de roulement est inférieure à 60 phr, de préférence comprise entre 25 phr et 55 phr, plus préférentiellement comprise entre 30 phr et 50 phr.

9. Procédé de fabrication d'un pneu selon l'une quelconque des revendications 1 à 8, dans lequel l'alimentation d'au moins un mélangeur continu en ledit premier composé élastomère et en au moins une partie de ladite au moins une résine comprend l'alimentation en au moins 15 phr de ladite au moins une résine.

10. Procédé de fabrication d'un pneu selon l'une quelconque des revendications 1 à 9, comprenant en outre l'alimentation dudit au moins un appareil de mélange en au moins un ingrédient choisi parmi : des agents de couplage au silane, des additifs, des plastifiants et leurs mélanges.

11. Procédé de fabrication d'un pneu selon l'une quelconque des revendications 1 à 10, dans lequel ledit au moins un mélangeur discontinu est choisi parmi un mélangeur interne ou un mélangeur ouvert.

12. Procédé de fabrication d'un pneu selon l'une quelconque des revendications 1 à 11, dans lequel ledit au moins un mélangeur continu est du type à deux vis ou à vis multiples ou ayant une pluralité de pales dans le cas d'un mélangeur à vis planétaires et dans lequel le mélange et la dispersion de ladite au moins une partie d'au moins une résine au moyen dudit au moins un mélangeur continu sont réalisés à une vitesse de rotation des vis ou des pales comprise entre 40 et 400 tr/min, de préférence entre 50 et 250 tr/min.

13. Procédé de fabrication d'un pneu selon l'une quelconque des revendications 1 à 12, dans lequel le mélange et la dispersion de ladite au moins une partie d'au moins une résine au moyen dudit au moins un mélangeur continu sont réalisés à une température comprise entre 110°C et 140°C.
